(19) Europäisches Patentamt / European Patent Office / Office européen des brevets

(11) **EP 3 856 942 B1**

(12) **EUROPEAN PATENT SPECIFICATION**

(45) Date of publication and mention
of the grant of the patent:
**20.12.2023 Bulletin 2023/51**

(21) Application number: **19778626.2**

(22) Date of filing: **24.09.2019**

(51) International Patent Classification (IPC):
**C22C 14/00** $^{(2006.01)}$    **C22F 1/18** $^{(2006.01)}$

(52) Cooperative Patent Classification (CPC):
**C22C 14/00; C22F 1/183**

(86) International application number:
**PCT/GB2019/052689**

(87) International publication number:
**WO 2020/065297 (02.04.2020 Gazette 2020/14)**

(54) **AN ALPHA TITANIUM ALLOY FOR ADDITIVE MANUFACTURING**

ALPHA-TITANLEGIERUNG ZUR GENERATIVEN FERTIGUNG

ALLIAGE DE TITANE ALPHA POUR FABRICATION ADDITIVE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.09.2018 GB 201815536**

(43) Date of publication of application:
**04.08.2021 Bulletin 2021/31**

(73) Proprietor: **Alloyed Limited**
**Yarnton**
**Kidlington**
**OX5 1QU (GB)**

(72) Inventor: **ALABORT MARTINEZ, Enrique**
**Kidlington, Oxfordshire OX5 1PF (GB)**

(74) Representative: **J A Kemp LLP**
**80 Turnmill Street**
**London EC1M 5QU (GB)**

(56) References cited:
**RU-C1- 2 484 166     RU-C1- 2 507 289**

- **Timetal: "Timetal 834", , 1 January 2000 (2000-01-01), pages 1-2, XP055937448, Retrieved from the Internet: URL:https://www.timet.com/assets/local/doc uments/datasheets/alphaalloys/834.pdf [retrieved on 2022-07-01]**
- **Timet: "Timetal 829 Datasheet", , 1 January 2000 (2000-01-01), pages 1-2, XP055937444, Retrieved from the Internet: URL:https://www.timet.com/assets/local/doc uments/datasheets/alphaalloys/829.pdf [retrieved on 2022-07-01]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to titanium-based alloy compositions designed for enhanced additive manufacturing which has properties comparable to or improved over existing alloys. Moreover, the alloy must exhibit a formability window - in terms of cracking susceptibility, solidification range and microstructure stability - which is comparable to or wider than equivalent grades of alloy. The mechanical performance at operative conditions have also been weighted in the design process of the new alloy.

Examples of typical compositions of near-alpha Ti-alloys are listed in Table 1.

**Table 1:** Nominal composition in wt.% of commercially used near-alpha titanium alloys.

| Alloy | Al | V | Fe | Mo | Cr | Zr | Nb | Si | Sn | Ti |
|---|---|---|---|---|---|---|---|---|---|---|
| Ti-5Al-1Sn-1V-1Zr-1Mo | 5 | 1 | - | 1 | - | 1 | - | - | 1 | Bal. |
| Ti-5Al-2.5Sn | 5 | - | - | - | - | - | - | - | 2.5 | Bal, |
| Ti-8Al-1Mo-1V | 8 | 1 | - | 1 | - | - | - | - | - | Bal. |
| Ti-6Al-5Zr-0.5Mo-0.25Si | 6 | - | - | 0.5 | - | 5 | - | 0.25 | - | Bal. |
| Ti-6Al-4Sn-4Zr-1Nb-1Mo-0.35Si | 6 | - | - | 1 | - | 4 | 1 | 0.35 | 4 | Bal. |
| Ti-6A1-2.75Sn-4Zr-0.4Mo-0.45Si | 6 | - | - | 0.4 | - | 4 | - | 0.45 | 2.75 | Bal. |
| Ti-11Sn-5Zr-2.25Al-1Mo-0.25Si | 2.5 | - | - | 1 | - | 5 | - | 0.25 | 11 | Bal. |

It is an aim of the invention to provide an alloy suitable for additive manufacturing, preferably which has improved additive manufacturability in comparison with the traditional near-alpha titanium alloys listed in Table 1.

RU 2 484 166 discloses a titanium based alloy containing the following in wt.%, Al - 5.7-6.7, Sn - 3.0-4.5, Zr - 3.0-4.5, Mo - 0.5-1.4, Nb - 0.2-0.6, W - 0.01-0.3, V - 0.3-0.9, Fe - 0.01-0.07, Si - 0.3-0.52, C - 0.03-0.10, O - 0.03-0.14, Ti making the rest.

RU 2 507 289 discloses titanium-based alloy contains the following in wt.%, Al 5.0-6.6, Mo 1.5-2.5, Zr 1.0-2.8, V 0.4-1.4, Fe 0.08-0.40, Si 0.08-0.28, Sn 1.5-3.8, Nb 0.4-1.2, O 0.02-0.18, C 0.008-0.080, Ti is the rest. TIMETAL 829 is a standard titanium weldable alloy having high strength, is creep resistant, and which was developed for gas turbines.

Preferably the alloy will have an improved mechanical behaviour (by including elements which harden both beta and alpha phases and by tuning the martensitic start temperature) and/or an improved manufacturability (by comparison of the transient solidification behaviour and the phase architecture during temperature cycling).

The present invention provides a titanium-based alloy composition given in the claims, consisting in weight percent, of: 4.0 to 8.0% aluminium, 3.0 to 9.0% tin, 0.0 to 3.5% zirconium, 0.0 to 2.0% niobium, 0.0 to 2.0% vanadium, 0.0 to 0.5% iron, 0.0 to 1.75% chromium, 0.0 to 2.0% molybdenum, 0.0 to 2.0% tungsten, 0.0 to 0.5% nickel, 0.0 and 1.0% tantalum, 0.0 to 0.5% cobalt, 0.0 to 0.75% silicon, 0.0 to 0.5% boron, 0.0 to 0.5% carbon, 0.0 to 0.5% oxygen, 0.0 to 0.5% hydrogen, 0.0 to 0.5% nitrogen, 0.0 to 0.5% palladium, 0.0 to 0.5% lanthanum, 0.0 to 0.5% manganese, 0.0 to 0.5 hafnium, the balance being titanium and incidental impurities which satisfies the following relationships:

$$0.107Al + 0.075V + 0.4Fe + 0.112Cr + 0.025Zr + 0.05 (Mo + 0.5 W) + 0.082 (Nb + Ta) + 0.027Sn > 1.0$$

and

$$0.076Al + 0.0153V - 1.53Fe - 0.23Cr + 0.025Zr + 0.05Mo + 0.028Nb + 0.0538Sn > 0.85$$

Where Al, W, V, Fe, Cr, Zr, Mo, Nb, Ta and Sn represent the amounts of aluminium, tungsten, vanadium, iron, chromium, zirconium, molybdenum, niobium, tantalum and tin in wt.% respectively. This composition provides a near-alpha titanium alloy with creep resistance which has good strength, good additive manufacturability, low susceptibility to form defects during manufacturing and a high susceptibility to produce desirable fine equiaxed microstructures during solidification.

In an embodiment of the invention, the titanium alloy consists of 1.75% or less molybdenum. This alloy has improved properties for additive manufacturability due to a lower solidification range and reduced martensitic start temperature while keeping the density within reasonable limits. Mo is a strong beta stabiliser thus even lower amounts of 1.5% or less, 1.25% or less or even 1.0% or less are preferred.

In an embodiment of the invention, the titanium alloy consists of 0.5% or more, preferably 0.6% or more molybdenum or even 0.75% or more molybdenum. Molybdenum is beneficial because of its higher growth restriction factor (and resulting finer microstructure). This amount of molybdenum also reduces the martensitic start temperature of the composition while using small wt. % of alloyants while also adding beta strength and reducing the diffusivity.

In an embodiment of the invention, the titanium alloy consists of 1.75% or less vanadium. This alloy has improved properties for additive manufacturability due to a lower solidification range and reduced martensitic start temperature while keeping the cost within reasonable limits. A low amount of V is also necessary to keep high alpha stability so levels of 1.5% or less, 1.25% or less or even 1.0 wt.% or less are desirable.

In an embodiment of the invention, the titanium alloy consists of 0.5% or more, preferably 0.75% or more vanadium or even 1.0% or more vanadium. Vanadium is beneficial because of its higher growth restriction factor (and resulting finer microstructure). This amount of vanadium also increases the strength of the alloy.

In an embodiment of the invention, the titanium alloy consists of 5.5% or more tin or even 6.0% or more tin. This achieves a lower cracking susceptibility factor and a large growth restriction factor - indicative of excellent additive manufacturing properties. Moreover, Sn can act as an alpha stabiliser, adding strength to the alloy.

In an embodiment of the invention, the titanium alloy consists of 8.5% or less tin or 8.0% or less tin. Reducing the amount of tin keeps the aluminium equivalent value at the right level to avoid formation of brittle phases whilst greatly increasing the manufacturability and the strength of the material.

In an embodiment of the invention, the titanium alloy consists of 0.25% or more niobium, preferably 0.5% or more niobium, more preferably 0.75% or more niobium. This achieves a lower cracking susceptibility factor and a large growth restriction factor so excellent additive manufacturing properties. Niobium also increases the strength of the beta phase.

In an embodiment of the invention, the titanium alloy consists of 1.5% or less niobium, preferably 1.25% or less niobium, more preferably 1.0% or less niobium. Reducing the amount of niobium reduces the cost of the alloy, the diffusivity and the density whilst increasing strength and alpha stability of the alloy.

In an embodiment of the invention, the titanium alloy consists of 0.25% or less iron. This limits the solidification range of the alloy and avoids a high cracking susceptibility factor. Further advantages are achieved by limiting iron to 0.15% or less. Moreover, Fe is a very strong beta stabiliser thus very small amounts are preferred.

In an embodiment of the invention, the titanium alloy consists of 0.1% or more iron. Such an alloy has a high growth restriction factor whilst keeping the solidification range, the cracking susceptibility low whilst keeping a high martensitic start temperature. Moreover, small amounts of iron allows recyclability of other titanium alloys.

In an embodiment of the invention, the titanium alloy consists of 1.5% or less chromium. This limits the solidification range of the alloy, avoids a high cracking susceptibility factor, reduces the diffusivity and keeps the cost low. Further advantages are achieved by limiting chromium to 1.0% or less, more preferably 0.75% or less.

In an embodiment of the invention, the titanium alloy consists of 0.25% or more chromium. Such an alloy has a high growth restriction factor whilst keeping the solidification range and the cracking susceptibility low. Moreover, chromium greatly increases the beta strength. Cr can be substituted by Mn by up to 0.5 wt.%.

In an embodiment of the invention, the titanium alloy consists of 1.5% or more zirconium. This improves the strength, the alpha stability and manufacturability (by solid solutioning and grain refinement) without affecting greatly the cost and density.

In an embodiment of the invention, the titanium alloy satisfies the flowing equation

$$800 \leq 883 - 150\,Fe\,wt.\% - 96\,Cr\,wt.\% - 49\,Mo\,wt.\% - 37\,V\,wt.\% - 17\,Nb\,wt.\%$$
$$- 12\,Ta\,wt.\% - 7\,Zr\,wt.\% - 3\,\text{Sn}\,wt.\% + 15\,Al\,wt.\%.$$

in which Fe, Cr, Mo, V, Nb, Ta, Zr, Sn and Al represent the amounts of iron, chromium, molybdenum, vanadium, niobium, tantalum, zirconium, tin and aluminium in wt% respectively. Such an alloy is considered a near-alpha alloy, with a large percentage of the microstructure being alpha phase in order to have the right mechanical performance at elevated temperatures.

In an embodiment of the invention, the titanium alloy consists of 75.0 wt% or more titanium, preferably 80.0 wt% or more titanium. A powder of such an alloy is easier to produce with good chemical homogeneity and reduced segregation.

In an embodiment of the invention, the titanium alloy satisfies the following Al equivalent equation

$$7.0 \leq Al\,wt.\% + \frac{1}{3}\,\text{Sn}\,wt.\% + \frac{1}{6}\,Zr\,wt.\% \leq 9.0$$

where Al, Sn and Zr represent the amounts of aluminium, tin and zirconium in wt % respectively.

when the introduced relationship is fulfilled, the alloy is optimally strengthened while the formation of brittle alpha-stabilised phases is avoided. High Al also helps with alloy production. High melting elements such as Mo can be master alloyed with Al during the ingot production process.

In an embodiment of the invention, boron is added as a grain refiner. Experience shows that additives of at least 0.05% are beneficial.

In an embodiment of the invention, the titanium alloy consists of 0.1 wt% or more hafnium, preferably 0.5 wt% or more hafnium as this increases wear resistance by increasing the hardness.

In an embodiment of the invention the sum of wt.% of each of cobalt, nickel and manganese is 1.0 wt.% or less, preferably 0.5 wt.% or less. Such an alloy has a low level of elements which would influence excessively the martensitic start temperature.

The term "consisting of" is used herein to indicate that 100% of the composition is being referred to and the presence of additional components is excluded so that percentages add up to 100%. Unless otherwise stated, all amounts are in weight percent.

The invention will be more fully described, by way of example only, with reference to the accompanying drawings in which:

Figure 1 shows the effect of Zr and Sn on the contour maps of the merit indeces for the Ti-6Al-YZr-XSn system.

Figure 2 shows the effect of Mo and Cr on the contour maps of the merit indeces for the Ti-6Al-4Sn-4Zr-YMo-XCr system.

Figure 3 shows the effect of V and Fe on the contour maps of the merit indeces for the Ti-6Al-4Sn-4Zr-YV-XFe system.

Figure 4 shows the effect of Mo and Nb on the contour maps of the merit indeces for the Ti-6Al-4Sn-4Zr-YMo-XNb system.

Figure 5 shows the effect of Al and Sn on the contour maps of the merit indeces for the Ti-4Zr-YAl-XSn system.

Figure 6 illustrates the effect of alloy additions on merit indices.

Figure 7 shows the merit index restrictions to isolate optimal alloy space.

Figure 8 shows the contour map of the solidification range for the preferred alloy space.

Figure 9 shows the contour map of the cracking susceptibility for the preferred alloy space.

Figure 10 shows the contour map of the growth restriction factor for the preferred alloy space.

Figure 11 shows the contour map of the melting temperature for the preferred alloy space.

Figure 12 shows the contour map of the martensitic start temperature for the preferred alloy space.

Figure 13 shows the contour map of the beta strength for the preferred alloy space.

Figure 14 shows the contour map of the density for the preferred alloy space.

Figure 15 shows the optimal alloys inside the preferred alloy space.

Figure 16 shows the chemistry range of the optimal alloy space.

Figure 17 shows how the restriction relationship works to separate the baseline alloys and the example alloys.

Figure 18 shows a scatter plot of the crack susceptibility factor against the solidification range.

Figure 19 shows a scatter plot of the crack susceptibility factor against the growth restriction factor.

Figure 20 shows a scatter plot of the growth restriction factor against the solidification range.

Figure 21 shows a scatter plot of the growth restriction factor against the rest of merit indeces.

Traditionally, titanium-based alloys have been designed through empiricism. Thus, their chemical compositions have been isolated using time consuming and expensive experimental development, involving small-scale processing of limited quantities of material and subsequent characterisation of their behaviour. The alloy composition adopted is then the one found to display the best, or most desirable, combination of properties. The large number of possible alloying elements indicates that these alloys are not entirely optimised and that improved alloys are likely to exist.

In titanium alloys, generally additions of aluminium (Al), zirconium (Zr), and tin (Sn) are added as $\alpha$-stabihsers to improve the mechanical strength. However, excess content of Al wt.% equivalent leads to stability problems: loss of ductility and stress corrosion occurs due to reordering reaction of $\alpha2$ formation after long-time exposure at high-temperature.

General additions of niobium (Nb), vanadium (V) and molybdenum (Mo) are added as a $\beta$-stabiliser to increase the mechanical strength without forming brittle intermetallic compounds. V makes a solid solution with the $\beta$ phase. Mo also improves greatly the corrosion resistance of the alloy.

Additions of nickel (Ni), cobalt (Co), iron (Fe) and chromium (Cr) may be added as $\beta$-stabiliser elements to increase the strength of the beta phase. Cobalt and nickel may each be present in an amount of 0.5% or less, preferably 0.25% or less. The requirements for iron and chromium are dealt with below.

Small additions of silicon (Si) and tin (Sn) are added to increase the strength and creep resistance. At high-temperatures, Si dissolves in the $\alpha$ phase and precipitates as silicides that pin mobile dislocations from climb and glide. Moreover, Si is believed to be a grain refiner thus an addition which may assist during the additive manufacturing process. Silicon was not part of the calculations described hereinafter, but experience shows that additives of up to 0.75%, but preferably at least 0.15% or 0.25% are beneficial to improve the mid-temperature creep resistance of the alloy and so are included in the inventive alloy. Limiting silicon to 0.5% may offer advantages in terms of additive manufacturability, high Si content is likely to substantially change the last steps of the solidification process and could make the alloy susceptible to hot cracking.

Boron (B) is added as a grain refiner. Boron was not part of the calculations described hereinafter, but experience shows that additives of up to 0.5% (preferably no more than 0.25%), but preferably at least 0.05% are beneficial to create finer beta grains during the solidification process and so may be included in the inventive alloy. Boron is preferable in amounts smaller than 0.25% because large TiB particles can cause embrittlement, particularly under fatigue.

The present inventors have not modelled the effect of low levels of other commonly used alloying elements such as calcium, carbon, cobalt, boron, silicon and manganese.

Manganese is a $\beta$-eutectoid stabiliser therefore additions of Mn will promote formation of unwanted phases, similarly to Cr, Ni and Fe. Due to a very similar density and cost to Cr, one may add up to 0.5 wt.% Mn, preferably substitute an amount of Cr (up to 0.5 wt. %) by Mn. Co, Cr, Ni, Mn and Fe are very strong beta-stabilisers thus the amount of these elements is preferably limited to a Cr equivalent of:

$$Cr + Co + Fe + Ni + Fe + Mn \leq \text{maximum Cr content of the composition.}$$

Calcium and carbon may be present at levels of up to 0.5% each and are not expected greatly to change the character of the alloy at this level.

Tantalum and Hafnium are not part of the main invention. In small amounts (e.g. of 0.1 wt. % or more) those elements will not have an impact in the main properties of the alloy and may even improve the hardness. However, due to their large elemental cost, Ta is limited to 1.0 wt. % or less, preferably 0.5 wt. % or less and Hf is limited to 0.5 wt.% or less, preferably $Ta + Hf \leq 0.5$ wt. %.

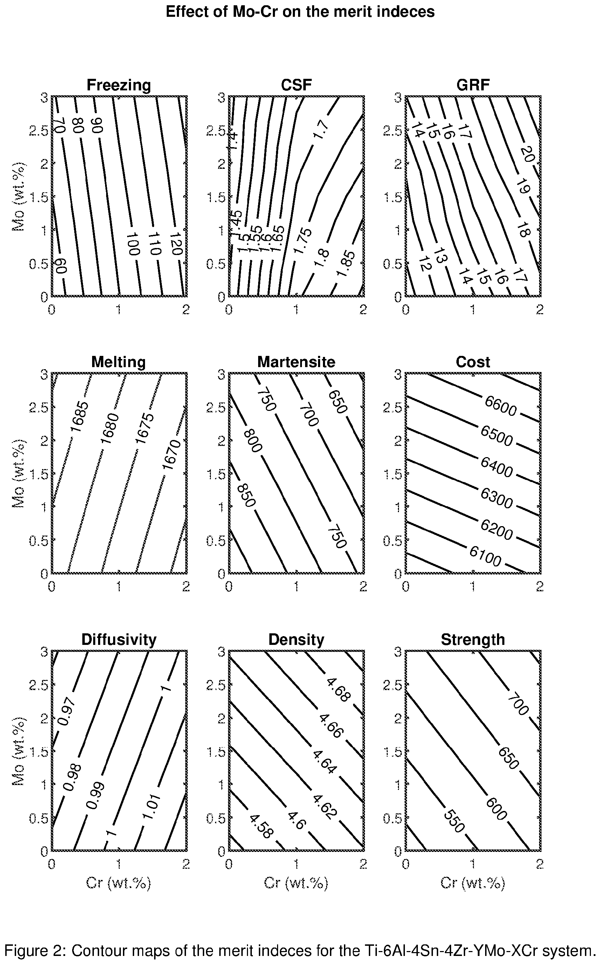

A modelling-based approach used for the isolation of new grades of titanium-based bio-compatible alloys is described here, termed the "Alloys-By-Design" (ABD) method. This approach utilises a framework of computational materials models to estimate design relevant properties across a very broad compositional space. Figure 2 illustrates the various steps of the method. In principle, this alloy design tool allows the so-called inverse problem to be solved; identifying optimum alloy compositions that best satisfy a specified set of design constraints.

The first step in the design process is the definition of an elemental list along with the associated upper and lower compositional limits. The compositional limits for each of the elemental additions considered in this invention - referred to as the "alloy design space" - are detailed in Table 2.

**Table 2:** Alloys design space in wt.% searched using the 'Alloy-by-Design' method.

|  | Al | V | Mo | Cr | Fe | Zr | Sn | Nb |
|---|---|---|---|---|---|---|---|---|
| **Min.** | 0.0 | 0.0 | 0.0 | 0.0 | 0.0 | 0.0 | 0.0 | 0.0 |
| **Max.** | 12.0 | 5.0 | 5.0 | 4.0 | 3.0 | 10.0 | 12.0 | 4.0 |

The second step relies upon thermodynamic calculations used to calculate the phase diagram and thermodynamic properties for a specific alloy composition. Often this is referred to as the CALPHAD method (CALculate PHAse Diagram). These calculations are conducted for those temperatures where an optimal phase architecture of the new alloy is found.

A third stage involves isolating alloy compositions which have the desired microstructural architecture for additive manufacturing and for bio-medical purposes. In the case of titanium alloys, the formability *via* additive manufacturing is related directly to the weldability of the alloy. In titanium alloys, the weldability can be correlated in a first instance to the microstructural architecture in terms of $\alpha$ and $\beta$ phase proportions. For near- $\alpha$ alloys, the weldability is good, these alloys are usually welded in annealed condition. For the $\alpha/\beta$ alloys, weldability is dependent on the amount of $\beta$ phase present. The most strongly beta stabilised alloys are usually embrittled during welding - high beta content alloys are rarely welded. The exception is Ti-6Al-4V which has good weldability and can have good mechanical properties after heat-treatment. Metastable $\beta$ alloys have good weldability and retain good mechanical properties after welding even without the need of post-heat treatment.

Thus, the model isolates all compositions in the design space which are the most amenable to additive manufacturing, which have a tendency to form near-alpha microstructures for optimal additive manufacturability, and which have the right amount of ingredients to add strength and to have a stable microstructure. Moreover, the important factors such as melting temperature and amount of alloyants - which are important to obtain a uniform and chemically homogeneous powder particle - are also weighted into the design process.

In the fourth stage, merit indices are estimated for the remaining isolated alloy compositions in the dataset. Examples of these include: martensitic transformation merit index (which describes the temperature at which the transformation starts), manufacturability (which is related to the freezing range and the susceptibility of the alloy to crack which is a function of the transient solidification behaviour and the phase proportions of the alloy), and powder processability (which is related to the melting temperature and the amount of titanium in the alloy).

The first merit index relates to the susceptibility of the alloy to form the martensitic phase. This merit index uses the martensite start temperature model as disclosed in Suresh Neelakantana, Prediction of the martensite start temperature for $\beta$ titanium alloys as a function of composition, 60 Scripta Materialia 611 (2009). The martensitic start temperature (in °C) is calculated as a function of the alloy composition following

$$M_S = 883 - 150\ Fe\ wt.\% - 96\ Cr\ wt.\% - 49\ Mo\ wt.\% - 37\ V\ wt.\% - 17\ Nb\ wt.\%$$
$$- 12\ Ta\ wt.\% - 7\ Zr\ wt.\% - 3\ \text{Sn}\ wt.\% + 15\ Al\ wt.\%$$

If the martensitic start temperature is below ambient temperature, martensitic phase will not be present at the microstructure level. Martensitic start temperature is an indication of the alpha stability of the alloy. It is the design intent to have a near-alpha alloy, thus, a lower limit for the martensitic start temperature is desirably set at 800°C by ensuring that the following equation is satisfied.

$$800 \leq 883 - 150\ Fe\ wt.\% - 96\ Cr\ wt.\% - 49\ Mo\ wt.\% - 37\ V\ wt.\% - 17\ Nb\ wt.\%$$
$$- 12\ Ta\ wt.\% - 7\ Zr\ wt.\% - 3\ \text{Sn}\ wt.\% + 15\ Al\ wt.\%$$

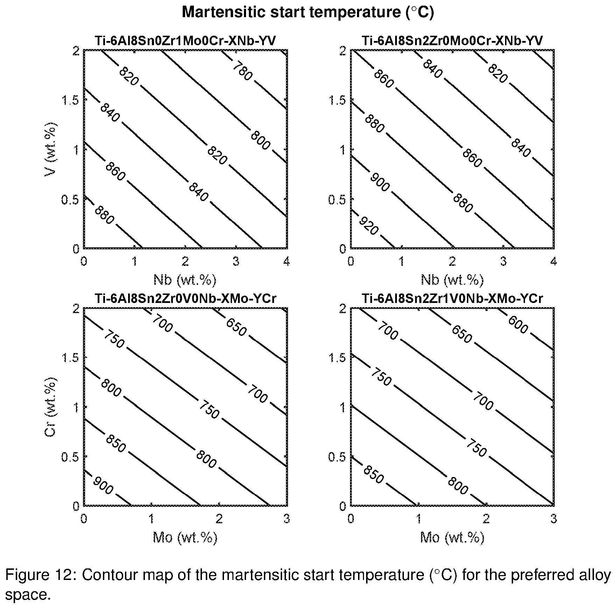

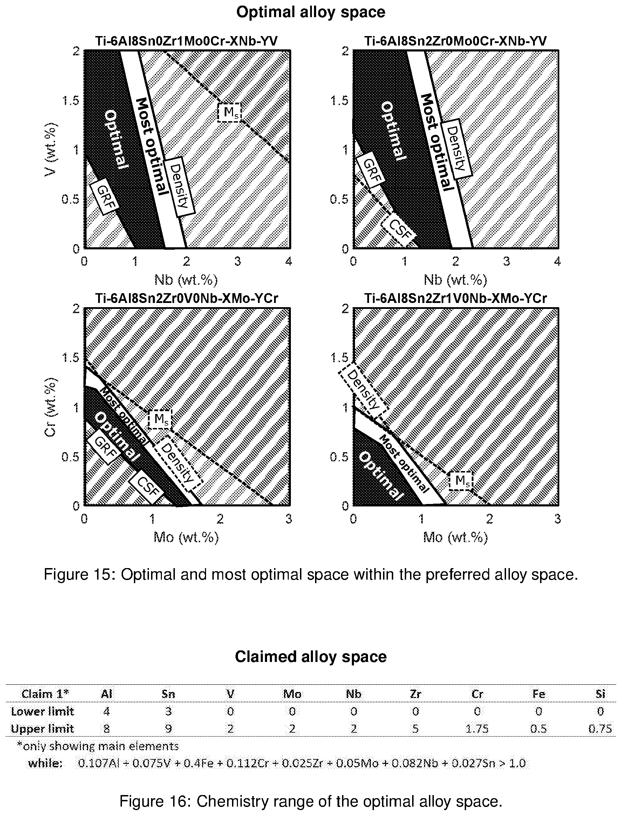

in which Fe, Cr, Mo, V, Nb, Ta, Zr, Sn and Al represent the amounts of iron, chromium, molybdenum, vanadium, niobium, tantalum, zirconium, tin and aluminium in wt% respectively. More desirably the martensite start temperature is 825°C or more, even more preferably 850°C or more. Figure 12 shows that the martensitic start temperature in the range of the invention can fall within the preferred range. The limit is plotted in Figure 15 as Ms.

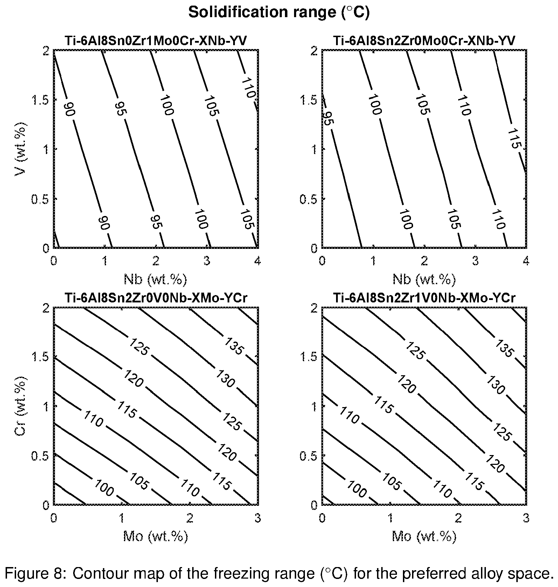

The second merit index is the freezing range. The freezing range is effectively the temperature range of the two-phase liquid + $\beta$ phase region. This merit index is calculated using the Scheil thermodynamic calculation in ThermoCalc and provides the transient solidification route of the alloy. An expanded solidification range has the potential to increase hot tearing and excessive remelting of underneath layers during laser manufacturing. However, a narrow freezing range risks partial remelting of the underneath layers during the AM process - this results in poor layer adhesion and low mechanical properties. Thus, it is desirable to monitor the temperature range at which the transition from liquid to solid occurs. Although not the most critical factor, it is desirable to maintain the freezing range within a reasonable value. Here, it is assumed that a freezing range between 90 and 275°C is optimum. Figure 8 shows that this is met for most of the range of the alloy and nearly met by the whole range of the alloy.

The third merit index is the crack susceptibility factor (CSF), it is calculated as a function of the time needed to solidify the last 10% of the liquid versus the time necessary to go from a 40% solid fraction to 90% solid fraction. The solidification is assumed to occur at a constant rate of decrease in temperature in order to facilitate the estimation of the solidification time. It is assumed that the risk of hot tearing is stronger during the last instants of the solidification, thus the goal is to minimise the time of that part of the solidification process. The CSF is calculated following

$$CSF = \frac{\text{time}(f_{\text{solid}} = 0.9) - time(f_{\text{solid}} = 1.0)}{\text{time}(f_{\text{solid}} = 0.4) - time(f_{\text{solid}} = 0.9)}$$

where time($f_{\text{solid}}$) is the time required to reach a particular volume fraction of solid.

The fourth merit index is the growth restriction factor (GRF). The methodology to derive it is described in T. E. Quested, A. T. Dinsdale & A. L. Greer, Thermodynamic Modeling of Growth-Restriction Effects in Aluminum Alloys, 53 Acta Materialia 1323 (2005). Generally, it is accepted that an alloy with a large growth restriction factor tends to reject solute atoms during solidification which translate into finer grain size microstructures which are beneficial. The GRF is calculated as the derivative of the fraction of solid with respect to undercooling following

$$GRF = \left(\frac{\partial(\Delta T_S)}{\partial f_s}\right)_{f_s \to 0}$$

where $f_s$ is the fraction of solid and $\Delta T_s$ is the solutal undercooling. This can be derived using the Scheil analysis. Further details can be found in the aforementioned scientific reference.

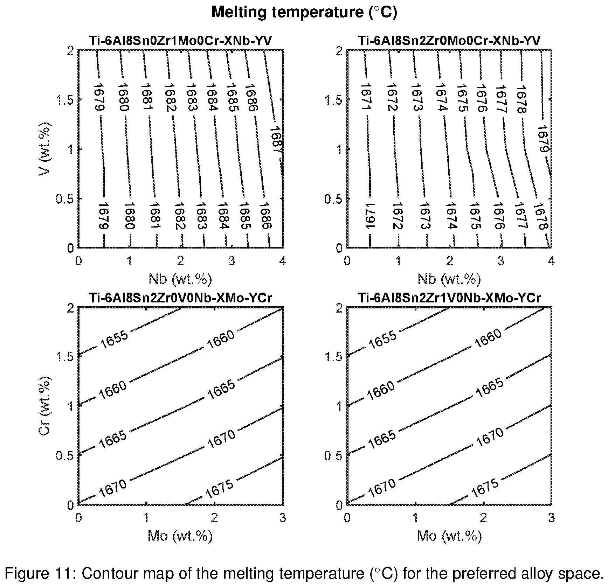

The fifth merit index is the powder processability. To facilitate the powder production process and obtain optimal elemental homogenisation, the melting temperature and the amount of alloyants must be minimised. Thus, for the sixth index, the temperature of the melting point is calculated, this is desirably below 1700°C as for alpha alloys melting is not usually a problem. Figure 11 shows that this can be achieved for the present alloy.

The fifth merit index also limits the amount of alloyants. Preferably pure titanium is at least 75 wt. % of the final composition in order to ease powder processing. If too little titanium is present it is believed that it may make processing of the powder (produced by atomisation of an ingot) difficult. That is, when the ingot of the correct composition is atomised, if too little titanium is present this may cause segregation whose occurrence is also related to the melting point. The atomised powder is then fed into a selective laser melting (SLM) machine for additive manufacture. Even more preferably the alloy is 80.0 wt.% or more titanium yet further to ease powder processing.

The sixth merit index is the diffusivity of the β-phase - which here we correlate to the liquidus diffusivity. This is linked to the processability by additive manufacturing. A slower diffusivity of β is translated into a finer microstructure that doesn't grow in a columnar manner during solidification. Here, the diffusivity is controlled by the faster diffusing species, consistent with

$$D_{eff} = \sum_i x_i D_i$$

where $x_i$ is the concentration of element $i$ and $D_i$ is its tracer diffusivity as shown in Table 3. The forming resistance merit index is related directly to this diffusivity, for clarity, the diffusivity merit index is written adimensionalised to the self-diffusivity of titanium - see Table 3.

Table 3: diffusivity (D) of beta stabilising elements at 870°C

| Diffusivity (D) of β-stabilising elements at 870°C | | |
|---|---|---|
| Element | D (cm$^2$s) | D of element / D of V |
| Ni | 220 x 10$^{-10}$ | 63.7 |
| Co | 190 x 10$^{-10}$ | 55.3 |
| Fe | 78 x 10$^{-10}$ | 22.5 |
| Cr | 11 x 10$^{-10}$ | 3.22 |

(continued)

| Diffusivity (D) of β-stabilising elements at 870°C | | |
|---|---|---|
| Element | D (cm²s) | D of element / D of V |
| β-Ti | $3.36 \times 10^{-10}$ | 1.0 |
| V | $2.4 \times 10^{-10}$ | 0.69 |
| Nb | $1.7 \times 10^{-10}$ | 0.49 |
| Al | $1.44 \times 10^{-10}$ | 0.43 |
| Mo | $0.6 \times 10^{-10}$ | 0.173 |
| W | $0.2 \times 10^{-10}$ | 0.063 |

The seventh merit index is density. The density, $\rho$, was calculated using a simple rule of mixtures and a correctional factor of 5% as has been shown practically to give a more accurate prediction, where, $\rho_i$ is the density for a given element and $x_i$ is the atomic fraction of the alloy element.

$$\rho = 1.05 \left[ \sum_i x_i \rho_i \right]$$

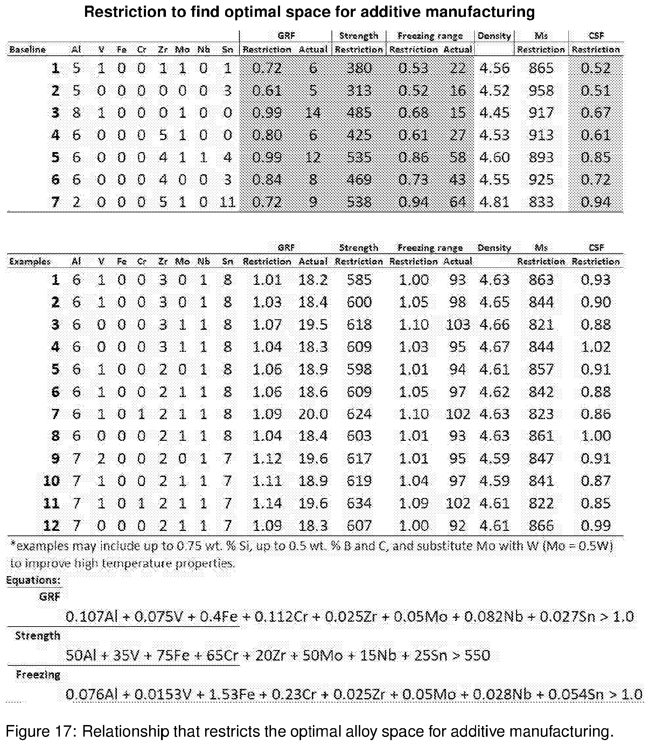

Desirably the density of the alloy is kept within reasonable limits. Figure 17 shows the density of baseline alloys falling between about 4.4 and 4.8 g/cm³. The density of the alloy is not the most important factor, but desirably the density is comparable to the baseline alloys, namely below 4.8 or 4.7 g/cm³. On the other hand, as shown by the examples of Figure 17, the present alloy can have a density of 4.67 g/cm³ or less or even 4.66 g/cm³ or less or even 4.63 g/cm³ or less and this is desirable. Most desirably the alloy has a density of 4.62 g/cm³ or less. The following equation gives a value for the density of the alloy:

$$\frac{1.05\left(\frac{4.43Ti}{4786} + \frac{2.7Al}{2698} + \frac{7.85Fe}{5584} + \frac{5.49V}{5094} + \frac{10.18Mo}{9594} + \frac{6.49Zr}{9122} + \frac{7.85Cr}{5199} + \frac{8.6Nb}{9290} + \frac{7.31Sn}{11871}\right)}{\frac{Ti}{4786} + \frac{Al}{2698} + \frac{V}{5094} + \frac{Fe}{5584} + \frac{Mo}{9594} + \frac{Zr}{9122} + \frac{Cr}{5199} + \frac{Nb}{9290} + \frac{Sn}{11871}}$$

The eighth merit index is cost. In order to estimate the cost of each alloy a simple rule of mixtures was applied, where the weight fraction of the alloy element, $x_i$, was multiplied by the current (2018) raw material cost for the alloying element, $c_i$.

$$Cost = \sum_i x_i c_i$$

The estimates assume that processing costs are identical for all alloys, i.e. that the product yield is not affected by composition.

The ninth merit index is the β-phase strength. This is described by Sadeghpor et. al. A new multi-element beta titanium alloy with a high yield strength exhibiting transformation and twinning induced plasticity effects Scripta Materialia (2018). A relationship that qualitatively measures the beta phase strength is expressed as

$$\Delta\sigma = 1.5n\,(Fe\,wt.\% + Mn\,wt.\%) + 1.3n\,(Cr\,wt.\%) + n\,(Al\,wt.\% + Mo\,wt.\%)$$
$$+ 0.7n(V\,wt.\%) + 0.5n\,(Sn\,wt.\%) + 0.4n\,(Zr\,wt.\%) + 0.3n\,(Nb\,wt.\%)$$

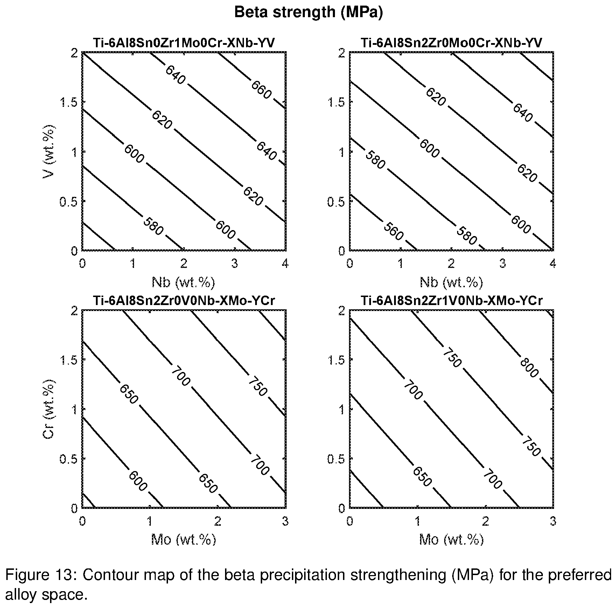

where $n$ is a material parameter (assumed $n=50$). Ideally, one wants to maximise the strength merit index. Preferably delta sigma is 550 or higher 0, more preferably 600 or higher and this is higher than achieved for any of the baseline alloys of Figure 17 meaning that any β-phase present will be stronger than in those alloys. Figure 13 shows that this level of beta strength can be achieved by the present alloy.

The ABD method described above was used to isolate the inventive alloy composition. The design intent for this alloy was to isolate the composition of a new near-alpha titanium alloy which exhibits a combination of stiffness, strength, manufacturability, processability, density, cost and stability which is comparable or better than equivalent grades of alloys. Desirably the microstructure is at least 90% alpha phase as measured by optical microscopy.

The material properties - determined using the ABD method - for the literature baseline titanium alloys are listed in Figure 17. The design of the new alloy was considered in relation to the predicted properties listed for these baseline alloys. The method was used to propose optimised alloy compositions with different levels of predicted strength and manufacturability parameters. The calculated material properties for 9 optimised alloys with nominal compositions according to Figure 16 and in accordance with the present invention are also given.

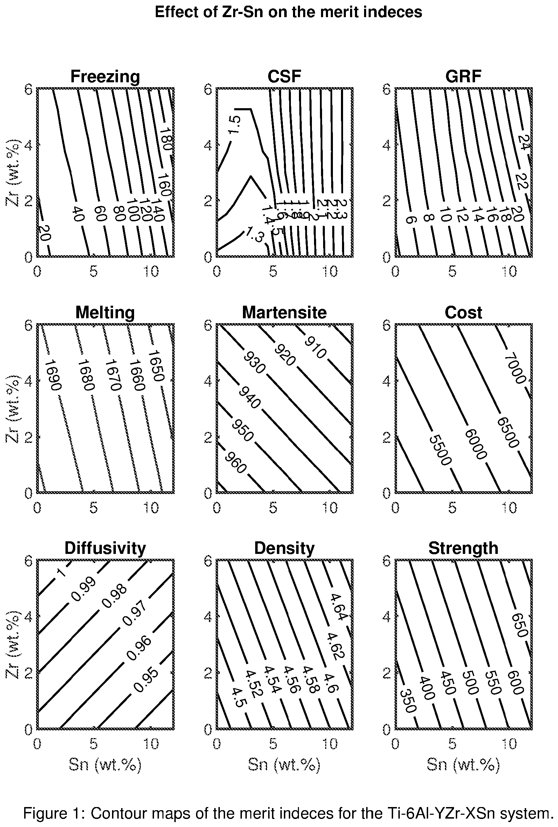

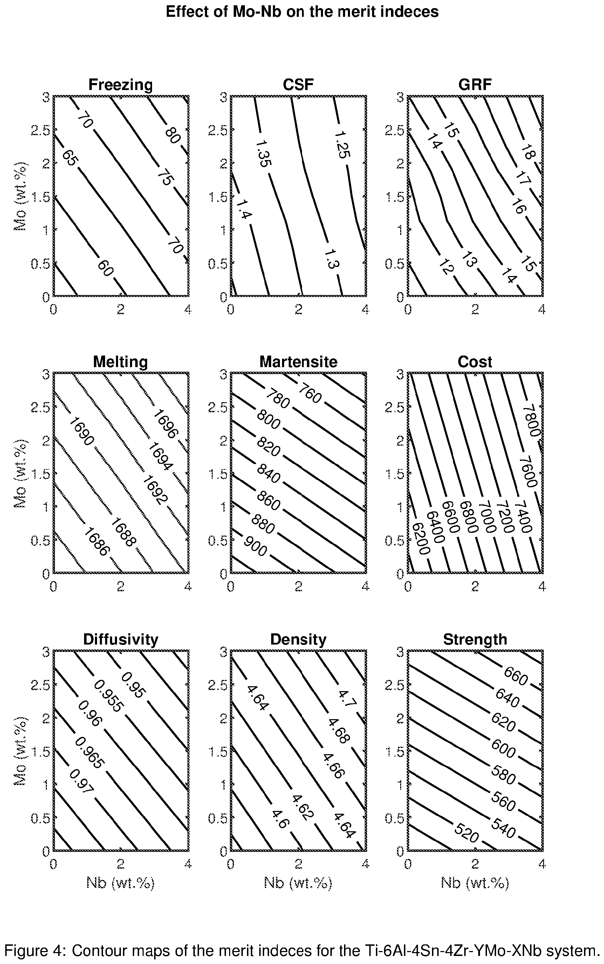

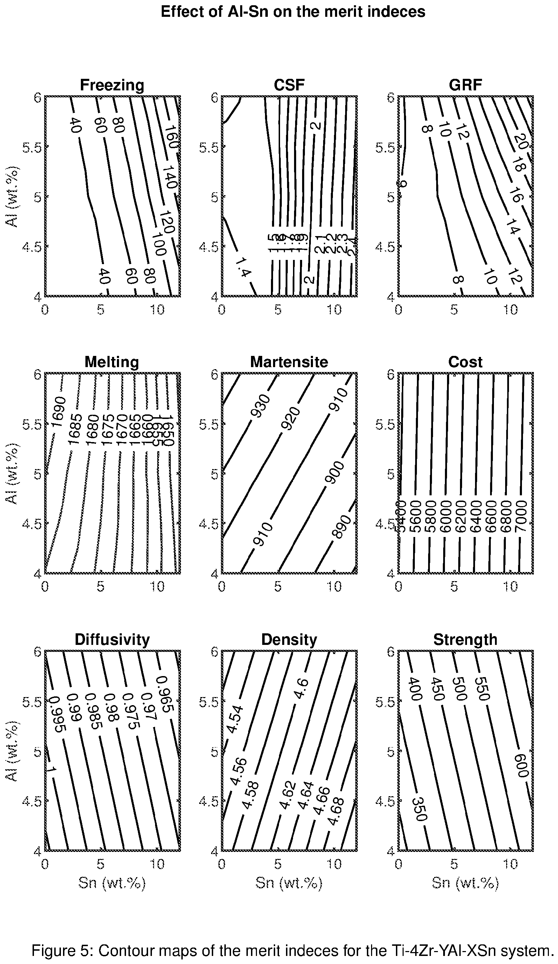

An important characteristic to improve the additive manufacturing properties and posterior microstructure of titanium alloys is a high growth restriction factor (GRF). Desirably a low cracking susceptibility (CSF) is also achieved. Figures 1-5 illustrate that Sn, Mo, V, Nb, Zr, Cr and Fe increase the GRF. The effect of Cr and Fe is the strongest. However, Cr increases CSF and freezing more than Mo and Fe greatly increase the range of solidification and increase the cracking susceptibility. Thus, the amount of Cr is restricted to amounts of 1.75% and below and Fe is restricted to values of 0.5 wt.% and below.

The amount of Sn is restricted to 9.0% in order to keep the aluminium equivalent to levels where $\alpha 2$ phases are not formed and in order to keep a low CSF - for values higher than Sn$\geq$5 wt. %, Sn tends to increase the CSF as illustrated in Figure 1.

Mo, V, Nb and Zr do not increase CSF greatly (Nb lowers it), but their quantities are limited to obtain a high martensitic start temperature - all of those are beta-stabilisers. However, these alloying elements are desirable because they add strength to any beta phase still present - or like Nb, they lower the CSF.

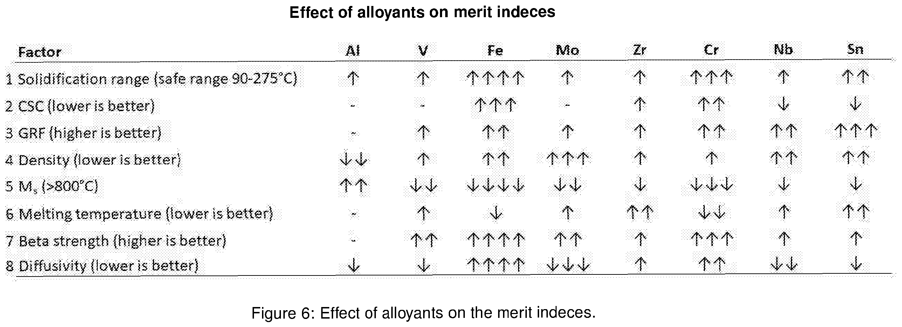

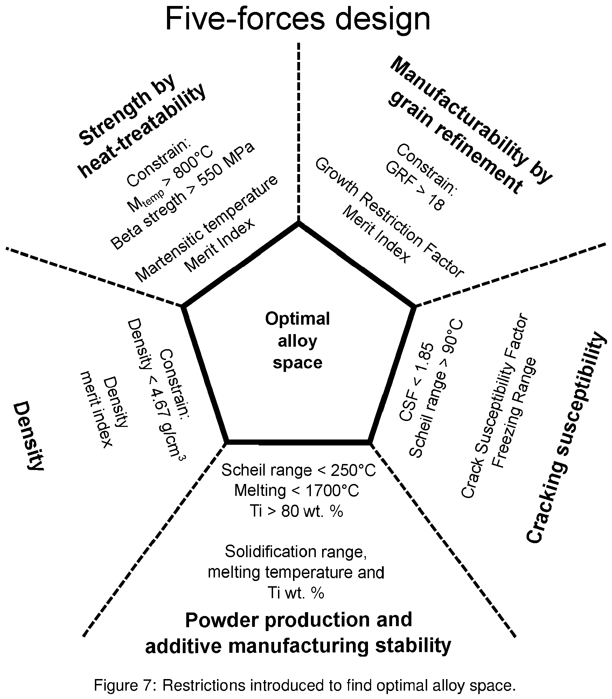

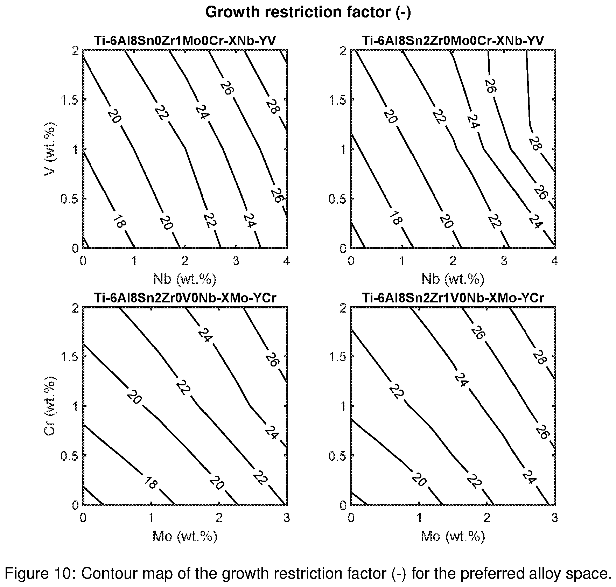

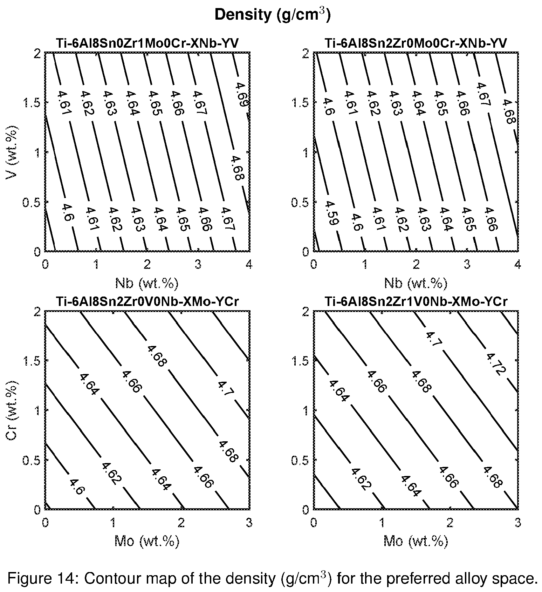

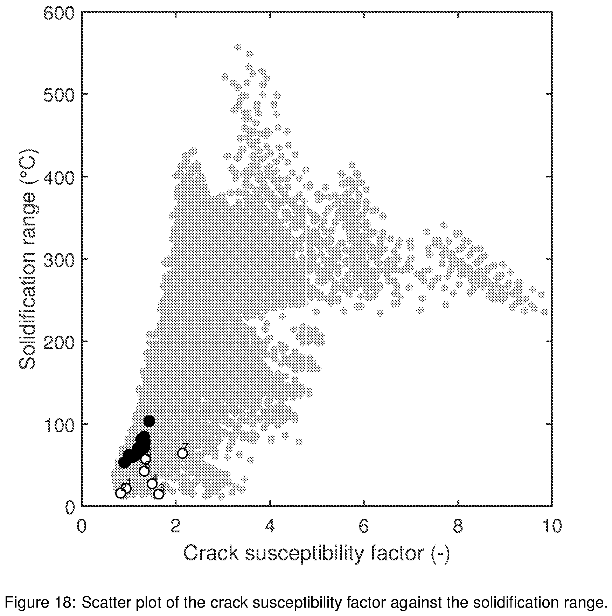

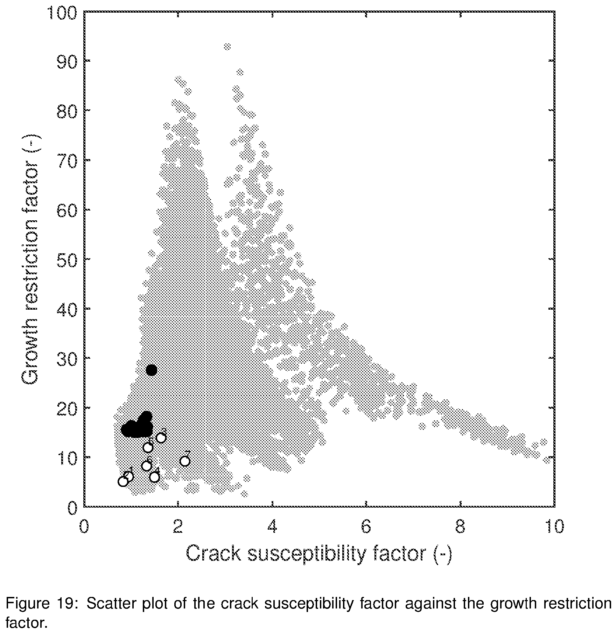

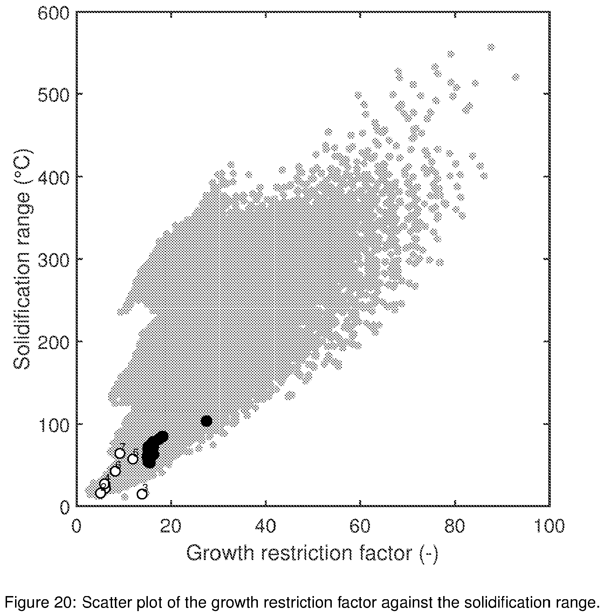

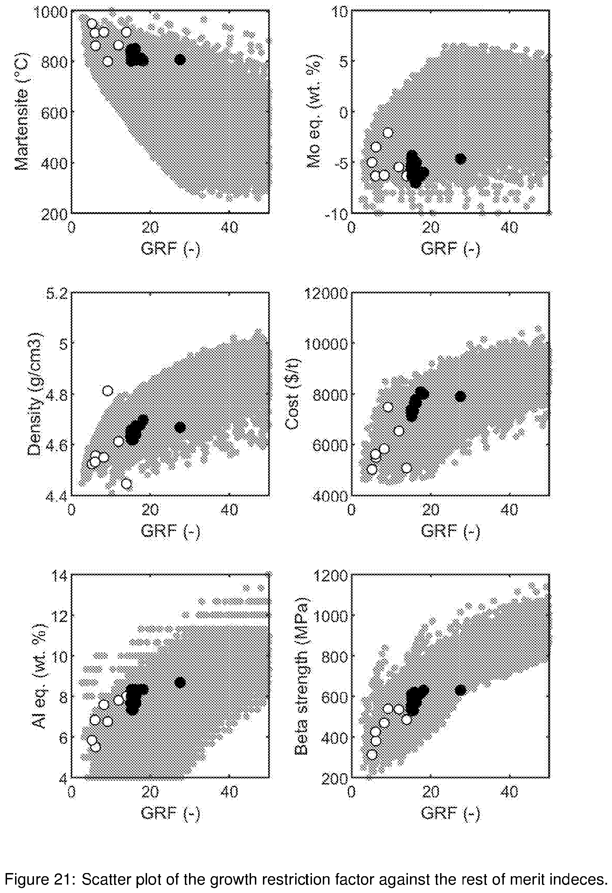

Figure 6 shows the effect of each alloy on various properties, Figure 7 shows the desired properties of the alloy and Figures 8 to 14 show variations of the merit indices in the preferred alloy space. Linear regression analysis was used to determine relationships which allow an alloy to achieve a certain merit index and these are plotted on Figure 15. Figure 17 shows the properties determined for the baseline alloys as well as 9 example alloys of the invention and compares the same alloys with the results of the linear regression analysis. Those 9 example alloys (dark dots) and the baseline alloys (light dots) are then plotted in Figures 18-21 from which the improvement in properties can clearly be seen.

The following equation derived by regression analysis from the results of the Scheil analysis of the fourth merit index gives an elemental relationship valid within the elemental of the range of the alloy (Al 4.0-8.0, Sn 3.0-9.0, Zr 0.0-5.0, Nb 0.0-2.0, V 0.0-2.0, Fe 0.0-0.5, Cr 0.0-1.75, Mo 0.0-2.0) between alloyants and a high growth restriction factor GRF ensuring that if fulfilled, a high GRF of 18 or more will be achieved:

$$0.107Al + 0.075V + 0.4Fe + 0.112Cr + 0.025Zr + 0.05\,(Mo + 0.5W) + 0.082\,(Nb + Ta) + 0.027Sn > 1.0$$

Where Al, V, Fe, Cr, Zr, Mo, W, Nb, Ta and Sn represent the amounts of aluminium, vanadium, iron, chromium, zirconium, molybdenum, tungsten, niobium, tantalum and tin in wt.% respectively. Desirably the left hand side of the above equation >1.05

This restricts the minimum amount of each element in order to achieve a high enough GRF (i.e. a GRF of at least 18 which is higher than the GRF achieved by any of the baseline alloys- see Figure 17). The line for GRF is plotted in Figure 15 as GRF.

The following equation derived by regression analysis from results of the third merit index valid within the elemental range of the alloy (Al 4.0-8.0, Sn 3.0-9.0, Zr 0.0-5.0, Nb 0.0-2.0, V 0.0-2.0, Fe 0.0-0.5, Cr 0.0-1.75, Mo 0.0-2.0) gives an elemental relationship between alloyants and a threshold where a low cracking susceptibility (CSF<1.85) is more likely within the preferred optimal space:

$$0.076Al + 0.0153V - 1.53Fe - 0.23Cr + 0.025Zr + 0.05Mo + 0.028Nb + 0.0538Sn > 0.85$$

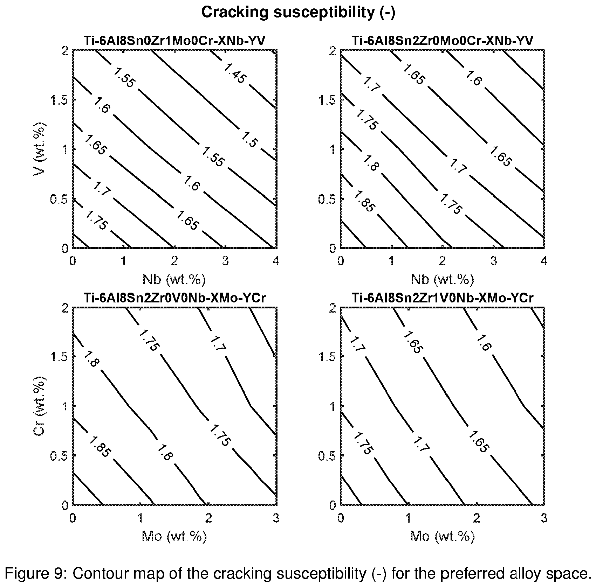

in which Fe, Cr, Mo, V, Nb, Ta, Zr, Sn and Al represent the amounts of iron, chromium, molybdenum, vanadium, niobium, tantalum, zirconium, tin and aluminium in wt% respectively. This line is plotted in Figure 15 and labelled CSF. From Figures 9 and 15 it can be seen that the above equation is met mostly for the alloy when the equation for GRF is also met. For compositions which meet the requirement for GRF, bot not for CSF, the CSF is only just above the desirable level for CSF (see Figure 9). A value of greater than or equal to 0.9, more preferably 1.0 is desirable as this results in even lower cracking susceptibility.

Molybdenum is important in increasing the growth restriction factor (Figure 2) without deleteriously affecting the cracking susceptibility factor (Figure 2). However, molybdenum has the effect of increasing the overall solidification (freezing) range (Figure 2) and tends to decrease the martensitic start temperature (the Figure labelled matensite). Nonetheless, molybdenum is a known grain refiner and a strong β stabiliser, thus it allows an alloy with a high titanium content to be produced (thereby increasing the ease of powder processing and its chemical homogeneity). Along with niobium and vanadium, molybdenum undesirably increases the melting temperature (Figure 2). Therefore, it has been found that in order to keep the amount of titanium high and to avoid a high density, a suitable maximum level of molybdenum is 2.0 wt.%, desirably 1.75 wt.% or less, more desirably 1.5 wt.% or less or even 1.0 wt.% or less. Although molybdenum is an optional element, because of its beneficial effect on GRF, its good corrosion resistance, and its positive effect on strength, molybdenum is desirably present in an amount of at least 0.5 wt.% or more desirably 0.75 wt.% or more. Desirably molybdenum is present in amount of 1.25 wt.% or less to reduce its effect on the increase on solidification range, to assure that the martensite start temperature range remains within the desired range and to keep the density low. On the other hand, an amount of molybdenum of 0.6 wt% or more, preferably 0.75 wt.% or more is advantageous as this ensures the GRF remaining high, the diffusivity of beta remains low and the beta phase is strengthened.

W can play a similar role to Mo in titanium alloys: (i) it as a beta isomorphous stabiliser, (ii) strengthens the beta phase, and (iii) it increases the growth restriction factor - and refines the grain size. W is usually less popular than Mo because: (i) it is more dense - almost double than Mo, (ii) it is difficult to pre-alloy - difficult to source in master alloy form, and (iii) it risks the formation of brittle particulates. Nevertheless, W has an even lower diffusivity than Mo and it could be used instead of Mo - despite the associated difficulties. In order to keep the beta stability to a minimum, W is limited to 2.0% or less - analogously to Mo. Because of the added density, in the present patent, Mo may be substituted by Mo following Mo = 2W.

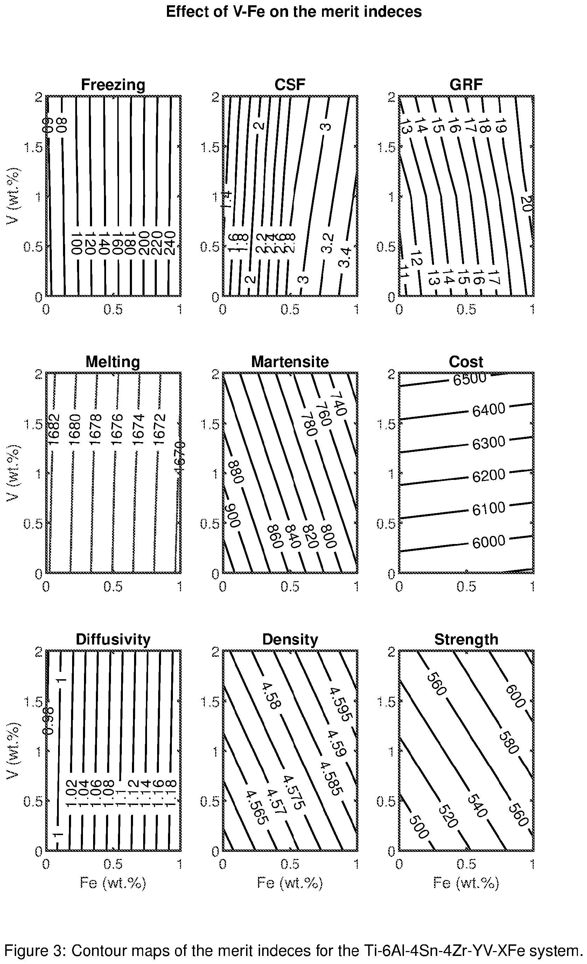

Vanadium also has a strong effect on reducing the martensitic start temperature and thus β-stabilising the alloy (Figure 3) thus V additions need to be carefully controlled. Vanadium is also important in increasing the growth restriction factor (Figure 3) without increasing the cracking susceptibility factor (Figure 3). Vanadium also decreases the effective diffusivity which helps with grain refinement during manufacturing. However, vanadium has the effect of increasing the overall solidification range (Figure 3), the cost (Figure 3), and it decreases the martensitic start temperature. Although vanadium is optional, because vanadium is a known grain refiner and good strengthener, its presence is desirable. Along with niobium and molybdenum, vanadium undesirably increases the melting temperature (Figure 3). Therefore, it has been found that a suitable level of vanadium is 2.0 wt.% or less, desirably 1.75 wt.% or less to keep the cost and density low, and the martensitic temperature high. Even lower levels of 1.5 wt.% or less, 1.25 wt.% or less or even 1.0 wt.% or less further reduce cost and density and keep the martensitic temperature high. Because of its beneficial effect on GRF, diffusivity, and beta strength, vanadium is present in an amount of at least 0.5 wt.% or more. Desirably vanadium is desirably present in amount of 1.5 wt.% or less to reduce its effect on the increase on solidification range, to assure that the martensite start temperature range remains within the desired range, to keep ductility high, and to keep the raw material cost low. On the other hand, an amount of vanadium of 0.75 wt% or more, preferably 1.0 wt.% or more is advantageous as this ensures the GRF remaining high without needing further to increase the amount of other GRF enhancing elements like Cr and Fe which also increase the cracking susceptibility.

Tin (Sn) and zirconium (Zr) are introduced to add strength to the alpha phase along with aluminium. Moreover, Sn offers good additive manufacturability since it increases the GRF - Sn is one of the strongest elements in improving the growth restriction. From the GRF point of view, one wants to maximise the amount of Sn in the alloy. Both Zr and Sn can act as α-stabilisers. The amount of Sn is desirably limited to Sn ≤ 8.5 wt. %, preferably 8.0% or less, more preferably 7.5% or less in order to avoid instable alpha phases and to promote a lower CSF. A minimum level of tin is 3.0% which helps increase manufacturability, strength and alpha-stability. In an embodiment at least 5.5% or more Sn is added or even 6.0% or more tin to increase the manufacturability (by increasing growth restriction) and to increase strength and alpha-stability.

Aluminium (Al) acts as a strong alpha strengthener, lowers the density of the alloy, reduces the cost and reduces the effective diffusivity. Al has a small effect on the GRF and a small effect on the CSF - therefore it is relatively benign to the manufacturability. However, Al greatly increases the martensitic temperature thus its presence is necessary. Therefore, in order to reduce density, cost and diffusivity and to increase strength, Al is present in amounts of 4.0% or more, preferably larger than 5.0%, more preferably 6.0%. In order to avoid strong alpha-stabilisation and to reduce the chances of forming brittle alpha phases, the Al amount is less than 8.0%, preferably less than 7.5%, more preferably 7.0% or less.

Zr does not have a substantial negative effect on manufacturability (CSF and GRF) or other microstructural phenomena such as martensite forming temperature. A maximum amount of 3.5% or less, ensures that the amount of secondary alloyants does not interfere with the strengthening benefits by creating brittle alpha phases. However, Zr can be added to the alloy to increase strength. The following equation relating to aluminium equivalents, when satisfied results in an increase in strength:

$$7.0 \leq \text{Al wt.}\% + \frac{1}{3}\text{Sn wt.}\% + \frac{1}{6}\text{Zr wt.}\% \leq 10.0, \text{preferably} \leq 9.0$$

Zr is 3.5% or less so that the preferable limit of 9.0 in the above equation can be met whilst allowing relatively high levels of Al and Sn, which are preferred to Zr. Additionally, this reduces cost and the density of the alloy and keeps cracking susceptibility within limits. Zr adds strength therefore it is desirable in an amount of 1.0% or more, preferably 1.5% or more, more preferably 2.0% or more.

Niobium (Nb) lowers the cracking susceptibility and increases the growth restriction as the amount of Nb increases - this is good for manufacturability. Increase of Nb also decreases diffusivity - good for manufacturability. However, Nb increases cost and density substantially and lowers the martensitic temperature. Also, Nb is not a strong beta strengthener - Fe, Mo and V are more effective in this regard. For the above reasons, Nb is optionally present in an amount of up to 2.0% or less, preferably 1.5% or less, more preferably 1.25% or less - this ensures cost and density within limits and a limited effect in the martensitic temperature while still leaving room for other stronger beta strengtheners. Nb is desirable in an amount of 0.25% or more, preferably 0.5% or more, more preferably 0.75% or more, more preferable 1.0% or more due to its positive effects on manufacturability.

Ta can play a similar role to Nb in titanium alloys. Both are beta isomorphous and both have similar strengthening properties and diffusivities. Moreover, both will give similar oxidation resistance without having a detrimental effect in the rest of the calculated properties. Therefore, Nb may be substituted by Ta in a 1-to-1 fashion.

Iron (Fe) and Chromium (Cr) are excellent strengtheners and increase greatly the growth restriction - this is good for mechanical properties and manufacturability respectively. However, Fe greatly increases the cracking susceptibility and the solidification range. For this reason, Fe is limited to amounts below 0.5%, more preferably 0.25% or less or even 0.15% or less. Chromium also increases cracking susceptibility - although less strongly than Fe - therefore, Cr is limited to amounts below 1.75%, preferably 1.5% or less, more preferably 1.0% or less or even 0.75% or less. Even small amounts of Cr increase strength and GRF, therefore Cr is present in a desirable amount larger than 0.15%, preferably 0.25% more preferably 0.35% or more. Small amounts of Fe allow one to recycle other titanium alloys and increases strength and GRF, therefore, Fe is desirable in amounts larger than 0.1%, more preferably 0.2% or more.

However, both Fe and Cr have detrimental effects for high temperature properties. Both are very fast diffusers. V also has detrimental effects on high temperature properties. If one wants to achieve high temperature properties, Fe, Cr, and V can be substituted with a balance of Mo and W (both are very slow diffusers). It is desirable that the substitution follows: Mo+0.5W=8Fe+2.24Cr (all in wt. %). This relationship is derived from the growth restriction factor equation. Mo can be substituted by 0.5W to respect the density limits.

O may be added as a solid solution strengthener to titanium alloys. Even very small amounts of O can greatly increase the strength of the alloy. However, excessive O will have a detrimental effect in ductility - thus limiting O to 0.5% or less. If one desires good creep properties, O should be limited to a minimum - it is a fast diffuser and will have a detrimental effect on creep. H and N have similar effects to O and therefore are limited in an analogous manner to up to 0.5%.

La has been shown to be a great grain stabiliser for manufacturability (it breaks planar growth). Therefore one may want to include limited amounts to further improve manufacturability. However, it is expensive and difficult to source as a master alloy therefore an optional additions in an amount of up to 0.5%.

Pd has been shown to offer excellent corrosion resistance when included in titanium alloys - even in very small quantities (<0.5%). However, Pd is very expensive and therefore it is treated as an optional element.

Figure 15 shows the various restrictions which can be applied to the claimed area to achieve one or more desired optional properties in addition to high GRF. The solid area shows the most desired area which has high GRF, as well as the optional but none the less desirable: low density, low CSF and a martensite start temperature above 800 degrees C. The desirable requirement for a low CSF is met by most of the alloys in the space due to the requirement for high GRF. Those alloys not meeting the CSF desirable target come very close (Figure 9). The higher the GRF, the better and this is reflected in the more optimal area indicated. These alloys will have a density between 4.62 and 4.63 g/cm$^3$. The desirable density limitation of 4.63 significantly reduces the most optimal alloy space and most alloys meeting the desirable density criteria also meet the desirable Ms criteria. At higher Zr content (lower row) the martensite start temperature requirement starts to become the dominant factor at higher Cr levels. However, by meeting the requirement for a high GRF value, the properties of the alloy within the elemental range of the present invention will be superior to those of the baseline alloys and the other properties are within acceptable limits, as shown by Figures 8-14.

Figures 18-21 illustrate the range of merit indices of alloys in the range in which the model was run (Table 2) with the properties of the existing baseline alloys numbered and plotted on the same graphs as well as areas of the inventive range plotted (as restricted in Figure 7). As can be seen, the alloys of the present invention have improved properties over the otherwise most suitable existing alloys.

**Claims**

1. A titanium-based alloy composition consisting in weight percent, of: 4.0 to 8.0% aluminium, 3.0 to 9.0% tin, 0.0 to 3.5% zirconium, 0.0 to 2.0% niobium, 0.0 to 2.0% vanadium, 0.0 to 0.5% iron, 0.0 to 1.75% chromium, 0.0 to 2.0% molybdenum, 0.0 to 2.0% tungsten, 0.0 to 0.5% nickel, 0.0 to 1.0% tantalum, 0.0 to 0.5% cobalt, 0.0 to 0.75% silicon, 0.0 to 0.5% boron, 0.0 to 0.5% carbon, 0.0 to 0.5% oxygen, 0.0 to 0.5% hydrogen, 0.0 to 0.5% nitrogen, 0.0 to 0.5% palladium, 0.0 to 0.5% lanthanum, 0.0 to 0.5% manganese, 0.0 to 0.5 hafnium, the balance being titanium and incidental impurities which satisfies the following relationships:

$$0.107Al + 0.075V + 0.4Fe + 0.112Cr + 0.025Zr + 0.05 (Mo + 0.5 W) + 0.082 (Nb + Ta) + 0.027Sn > 1.0$$

and

$$0.076Al + 0.0153V - 1.53Fe - 0.23Cr + 0.025Zr + 0.05Mo + 0.028Nb + 0.0538Sn > 0.85$$

where Al, W, V, Fe, Cr, Zr, Mo, Nb, Ta and Sn represent the amounts of aluminium, tungsten, vanadium, iron, chromium, zirconium, molybdenum, niobium, tantalum and tin in wt.% respectively.

2. The titanium-based alloy composition of claim 1, consisting of 1.75% or less molybdenum, preferably 1.5% or less, more preferably 1.25% or less molybdenum, even more preferably 1.0% or less molybdenum.

3. The titanium-based alloy composition of claim 1 or 2, which satisfies the following equation

$$7.0 \leq Al \, wt.\% + \frac{1}{3} Sn \, wt.\% + \frac{1}{6} Zr \, wt.\% \leq 10.0$$

preferably

$$7.0 \leq Al \, wt.\% + \frac{1}{3} Sn \, wt.\% + \frac{1}{6} Zr \, wt.\% \leq 9.0$$

where Al, Sn and Zr represent the amounts of aluminium, tin and zirconium in wt % respectively.

4. The titanium-based alloy composition of any of claims 1 to 3, consisting of 5.5% or more tin, preferably 6.0% or more tin.

5. The titanium-based alloy composition of any of claims 1 to 4, consisting of 0.5% or more vanadium, preferably 0.75% or more vanadium, more preferably 1.0% or more vanadium.

6. The titanium-based alloy composition of any of claims 1 to 5, consisting of 0.1% or more iron, preferably 0.2% or more iron.

7. The titanium-based alloy composition of any of claims 1 to 6, which satisfies the flowing equation

$$800 \leq 883 - 150 \, Fe \, wt.\% - 96 \, Cr \, wt.\% - 49 \, Mo \, wt.\% - 37 \, V \, wt.\%$$
$$- 17 \, Nb \, wt.\% - 12 \, Ta \, wt.\% - 7 \, Zr \, wt.\% - 3 \, Sn \, wt.\%$$
$$+ 15 \, Al \, wt.\%$$

in which Fe, Cr, Mo, V, Nb, Ta, Zr, Sn and Al represent the amounts of iron, chromium, molybdenum, vanadium, niobium, tantalum, zirconium, tin and aluminium in wt% respectively.

8. The titanium-based alloy composition of any of claims 1 to 7, consisting of 1.5% or less chromium, more preferably 1.0% or less chromium, more preferably 0.75% or less chromium.

9. The titanium-based alloy composition of any of claims 1 to 8, consisting of 0.15% or more chromium, preferably 0.25% or more chromium, more preferably 0.35% or more chromium.

10. The titanium-based alloy composition of any of claims 1 to 9, consisting of 1.5% or less niobium, more preferably 1.25% or less niobium.

11. The titanium-based alloy composition of any of claims 1 to 10, consisting of 0.25% or more niobium, preferably 0.5% or more niobium, more preferably 0.75% or more niobium, even more preferably 1.0% or more niobium.

12. The titanium-based alloy composition of any of claims 1 to 11, which satisfies the flowing equation

$$0.076Al + 0.0153V - 1.53Fe - 0.23Cr + 0.025Zr + 0.05Mo + 0.028Nb + 0.0538Sn > 0.9,$$

preferably > 1.0
in which Fe, Cr, Mo, V, Nb, Ta, Zr, Sn and Al represent the amounts of iron, chromium, molybdenum, vanadium, niobium, tantalum, zirconium, tin and aluminium in wt% respectively.

13. The titanium-based alloy composition of any of claims 1 to 12, wherein the sum of wt % of each of cobalt, nickel and manganese is 1.0 wt. % or less, preferably 0.5 wt% or less.

14. The titanium-based alloy composition of any of claims 1 to 13, wherein the sum in weight percent of chromium, cobalt, iron, nickel and manganese is 1.75 wt.% or less, preferably of 1.5 wt.% or less, more preferably 1.0 wt.% or less, more preferably 0.75 wt.% or less.

15. The titanium-based alloy composition of any of claims 1 to 14, wherein the alloy has a microstructure of at least 90% alpha phase.


**Patentansprüche**

1. Legierungszusammensetzung auf Titanbasis, bestehend in Gewichtsprozent aus: 4,0 bis 8,0 % Aluminium, 3,0 bis 9,0 % Zinn, 0,0 bis 3,5 % Zirkonium, 0,0 bis 2,0 % Niobium, 0,0 bis 2,0 % Vanadium, 0,0 bis 0,5 % Eisen, 0,0 bis 1,75 % Chrom, 0,0 bis 2,0 % Molybdän, 0,0 bis 2,0 % Wolfram, 0,0 bis 0,5 % Nickel, 0,0 bis 1,0 % Tantal, 0,0 bis 0,5 % Kobalt, 0,0 bis 0,75 % Silizium, 0,0 bis 0,5 % Bor, 0,0 bis 0,5 % Kohlenstoff, 0,0 bis 0,5 % Sauerstoff, 0,0 bis 0,5 % Wasserstoff, 0,0 bis 0,5 % Stickstoff, 0,0 bis 0,5 % Palladium, 0,0 bis 0,5 % Lanthan, 0,0 bis 0,5 % Mangan, 0,0 bis 0,5 Hafnium, wobei der Rest Titan und zufällige Verunreinigungen sind, die die folgenden Beziehungen erfüllen:

$$0{,}107\,Al + 0{,}075\,V + 0{,}4\,Fe + 0{,}112\,Cr + 0{,}025\,Zr + 0{,}05\,(Mo + 0{,}5\,W) + 0{,}082\,(Nb + Ta) + 0{,}027\,Sn > 1{,}0$$

und

$$0{,}076\,Al + 0{,}0153\,V - 1{,}53\,Fe - 0{,}23\,Cr + 0{,}025\,Zr + 0{,}05\,Mo + 0{,}028\,Nb + 0{,}0538\,Sn > 0{,}85$$

wobei Al, W, V, Fe, Cr, Zr, Mo, Nb, Ta und Sn für die Anteile von Aluminium, Wolfram, Vanadium, Eisen, Chrom, Zirkonium, Molybdän, Niob, Tantal und Zinn in Gew.-% stehen.

2. Legierungszusammensetzung auf Titanbasis nach Anspruch 1, bestehend aus 1,75 % oder weniger Molybdän, vorzugsweise 1,5 % oder weniger, noch bevorzugter 1,25 % oder weniger Molybdän, noch bevorzugter 1,0 % oder weniger Molybdän.

3. Legierungszusammensetzung auf Titanbasis nach Anspruch 1 oder 2, die die folgende Gleichung erfüllt

$$7,0 \leq \text{Al Gew.-\%} + \frac{1}{3} \text{Sn Gew.\%} + \frac{1}{6} \text{Zr Gew.-\%} \leq 10,0$$

vorzugsweise

$$7,0 \leq \text{Al Gew.-\%} + \frac{1}{3} \text{Sn Gew.\%} + \frac{1}{6} \text{Zr Gew.-\%} \leq 9,0$$

wobei Al, Sn und Zr die Mengen an Aluminium, Zinn bzw. Zirkonium in Gew.-% darstellen.

4. Legierungszusammensetzung auf Titanbasis nach einem der Ansprüche 1 bis 3, bestehend aus 5,5 % oder mehr Zinn, vorzugsweise 6,0 % oder mehr Zinn.

5. Legierungszusammensetzung auf Titanbasis nach einem der Ansprüche 1 bis 4, bestehend aus 0,5 % oder mehr Vanadium, vorzugsweise 0,75 % oder mehr Vanadium, noch bevorzugter 1,0 % oder mehr Vanadium.

6. Legierungszusammensetzung auf Titanbasis nach einem der Ansprüche 1 bis 5, bestehend aus 0,1 % oder mehr Eisen, vorzugsweise 0,2 % oder mehr Eisen.

7. Legierungszusammensetzung auf Titanbasis nach einem der Ansprüche 1 bis 6, die folgende Fließgleichung erfüllt:

$$800 \leq 883 - 150 \text{ Fe Gew.-\%} - 96 \text{ Cr Gew.-\%} - 49 \text{ Mo Gew.-\%} - 37 \text{ V Gew.-\%} -$$

$$17 \text{ Nb Gew.-\%} - 12 \text{ Ta Gew.-\%} - 7 \text{ Zr Gew.-\%} - 3 \text{ Sn Gew.-\%} + 15 \text{ Al Gew.-\%}.$$

in der Fe, Cr, Mo, V, Nb, Ta, Zr, Sn und Al die Mengen an Eisen, Chrom, Molybdän, Vanadium, Niob, Tantal, Zirkonium, Zinn bzw. Aluminium in Gew.-% darstellen.

8. Legierungszusammensetzung auf Titanbasis nach einem der Ansprüche 1 bis 7, bestehend aus 1,5 % oder weniger Chrom, bevorzugter 1,0 % oder weniger Chrom, noch bevorzugter 0,75 % oder weniger Chrom.

9. Legierungszusammensetzung auf Titanbasis nach einem der Ansprüche 1 bis 8, bestehend aus 0,15 % oder mehr Chrom, vorzugsweise 0,25 % oder mehr Chrom, besonders bevorzugt 0,35 % oder mehr Chrom.

10. Legierungszusammensetzung auf Titanbasis nach einem der Ansprüche 1 bis 9, bestehend aus 1,5 % oder weniger Niob, vorzugsweise 1,25 % oder weniger Niob.

11. Legierungszusammensetzung auf Titanbasis nach einem der Ansprüche 1 bis 10, bestehend aus 0,25 % oder mehr Niob, vorzugsweise 0,5 % oder mehr Niob, mehr bevorzugt 0,75 % oder mehr Niob, noch bevorzugter 1,0 % oder mehr Niob.

12. Legierungszusammensetzung auf Titanbasis nach einem der Ansprüche 1 bis 11, die folgende Fließgleichung erfüllt:

$$0,076 \text{ Al} + 0,0153 \text{ V} - 1,53 \text{ Fe} - 0,23 \text{ Cr} + 0,025 \text{ Zr} + 0,05 \text{ Mo} + 0,028 \text{ Nb} +$$

$$0,0538 \text{ Sn} > 0,9, \text{ vorzugsweise} > 1,0$$

in der Fe, Cr, Mo, V, Nb, Ta, Zr, Sn und Al die Mengen an Eisen, Chrom, Molybdän, Vanadium, Niob, Tantal, Zirkonium, Zinn bzw. Aluminium in Gew.-% darstellen.

13. Legierungszusammensetzung auf Titanbasis nach einem der Ansprüche 1 bis 12, wobei die Gew.-%-Summe von Kobalt, Nickel und Mangan jeweils 1,0 Gew.-% oder weniger, vorzugsweise 0,5 Gew.-% oder weniger beträgt.

**14.** Legierungszusammensetzung auf Titanbasis nach einem der Ansprüche 1 bis 13, wobei die Gewichtsprozent-Summe von Chrom, Kobalt, Eisen, Nickel und Mangan 1,75 Gew.-% oder weniger, vorzugsweise 1,5 Gew.-% oder weniger, noch bevorzugter 1,0 Gew.-% oder weniger, noch bevorzugter 0,75 Gew.-% oder weniger beträgt.

**15.** Legierungszusammensetzung auf Titanbasis nach einem der Ansprüche 1 bis 14, wobei die Legierung eine Mikrostruktur von mindestens 90 % Alpha-Phase aufweist.

**Revendications**

**1.** Composition d'alliage à base de titane constituée, en pourcentage en poids, de : 4,0 à 8,0 % d'aluminium, 3,0 à 9,0 % d'étain, 0,0 à 3,5 % de zirconium, 0,0 à 2,0 % de niobium, 0,0 à 2,0 % de vanadium, 0,0 à 0,5 % de fer, 0,0 à 1,75 % de chrome, 0,0 à 2,0 % de molybdène, 0,0 à 2,0 % de tungstène, 0,0 à 0,5 % de nickel, 0,0 à 1,0 % de tantale, 0,0 à 0,5 % de cobalt, 0,0 à 0,75 % de silicium, 0,0 à 0,5 % de bore, 0,0 à 0,5 % de carbone, 0,0 à 0,5 % d'oxygène, 0,0 à 0,5 % d'hydrogène, 0,0 à 0,5 % d'azote, 0,0 à 0,5 % de palladium, 0,0 à 0,5 % de lanthane, 0,0 à 0,5 % de manganèse, 0,0 à 0,5 hafnium, le reste étant du titane et des impuretés accidentelles qui satisfont aux relations suivantes :

$$0,107Al + 0,075V + 0,4Fe + 0,112Cr + 0,025Zr + 0,05 (Mo + 0,5 W) + 0,082 (Nb + Ta) + 0,027Sn > 1,0$$

et

$$0,076Al + 0,0153V - 1,53Fe - 0,23Cr + 0,025Zr + 0,05Mo + 0,028Nb + 0,0538Sn > 0,85$$

où Al, W, V, Fe, Cr, Zr, Mo, Nb, Ta et Sn représentent les quantités d'aluminium, de tungstène, de vanadium, de fer, de chrome, de zirconium, de molybdène, de niobium, de tantale et d'étain en % en poids respectivement.

**2.** Composition d'alliage à base de titane selon la revendication 1, constituée de 1,75 % ou moins de molybdène, préférablement de 1,5 % ou moins, plus préférablement de 1,25 % ou moins de molybdène, encore plus préférablement de 1,0 % ou moins de molybdène.

**3.** Composition d'alliage à base de titane selon la revendication 1 ou 2, qui satisfait à l'équation suivante

$$7,0 \leq Al \text{ % en poids} + 1/3 \text{ Sn % en poids} + 1/6 \text{ Zr % en poids} \leq 10,0$$

$$7,0 \leq Al \text{ % en poids} + 1/3 \text{ Sn % en poids} + 1/6 \text{ Zr % en poids} \leq 9,0$$

préférablement où Al, Sn et Zr représentent respectivement les quantités d'aluminium, d'étain et de zirconium en % en poids.

**4.** Composition d'alliage à base de titane selon l'une quelconque des revendications 1 à 3, constituée de 5,5 % ou plus d'étain, préférablement 6,0 % ou plus d'étain.

**5.** Composition d'alliage à base de titane selon l'une quelconque des revendications 1 à 4, constituée de 0,5 % ou plus de vanadium, préférablement 0,75 % ou plus de vanadium, plus préférablement 1,0 % ou plus de vanadium.

**6.** Composition d'alliage à base de titane selon l'une quelconque des revendications 1 à 5, constituée de 0,1 % ou plus de fer, préférablement 0,2 % ou plus de fer.

**7.** Composition d'alliage à base de titane selon l'une quelconque des revendications 1 à 6, qui satisfait à l'équation suivante

$$800 \leq 883 - 150 \, Fe \, \% \, en \, poids - 96 \, Cr \, \% \, en \, poids - 49 \, Mo \, \% \, en \, poids - 37 \, V \, \% \, en \, poids - 17 \, Nb$$

$$\% \, en \, poids - 12 \, Ta \, \% \, en \, poids - 7 \, Zr \, \% \, en \, poids - 3 \, Sn \, \% \, en \, poids + 15 \, Al \, \% \, en \, poids$$

dans laquelle Fe, Cr, Mo, V, Nb, Ta, Zr, Sn et Al représentent les quantités de fer, chrome, molybdène, vanadium, niobium, tantale, zirconium, étain et aluminium en % en poids respectivement.

8.  Composition d'alliage à base de titane selon l'une quelconque des revendications 1 à 7, constituée de 1,5 % ou moins de chrome, plus préférablement 1,0 % ou moins de chrome, plus préférablement 0,75 % ou moins de chrome.

9.  Composition d'alliage à base de titane selon l'une quelconque des revendications 1 à 8, constituée de 0,15 % ou plus de chrome, préférablement 0,25 % ou plus de chrome, plus préférablement 0,35 % ou plus de chrome.

10. Composition d'alliage à base de titane selon l'une quelconque des revendications 1 à 9, constituée de 1,5 % ou moins de niobium, plus préférablement de 1,25 % ou moins de niobium.

11. Composition d'alliage à base de titane selon l'une quelconque des revendications 1 à 10, constituée de 0,25 % ou plus de niobium, préférablement 0,5 % ou plus de niobium, plus préférablement 0,75 % ou plus de niobium, encore plus préférablement 1,0 % ou plus de niobium.

12. Composition d'alliage à base de titane selon l'une quelconque des revendications 1 à 11, qui satisfait à l'équation suivante

$$0,076 \, Al + 0,0153 \, V - 1,53 \, Fe - 0,23 \, Cr + 0,025 \, Zr + 0,05 \, Mo + 0,028 \, Nb + 0,0538 \, Sn > 0,9,$$

préférablement > 1,0
dans laquelle Fe, Cr, Mo, V, Nb, Ta, Zr, Sn et Al représentent les quantités de fer, chrome, molybdène, vanadium, niobium, tantale, zirconium, d'étain et d'aluminium en % en poids respectivement.

13. Composition d'alliage à base de titane selon l'une quelconque des revendications 1 à 12, dans laquelle la somme en % en poids de chacun du cobalt, du nickel et du manganèse est de 1,0 % en poids ou moins, préférablement 0,5 % en poids ou moins.

14. Composition d'alliage à base de titane selon l'une quelconque des revendications 1 à 13, dans laquelle la somme en pourcentage en poids de chrome, cobalt, fer, nickel et manganèse est de 1,75 % en poids ou moins, préférablement 1,5 % en poids ou moins, plus préférablement 1,0 % en poids ou moins, encore plus préférablement 0,75 % en poids ou moins.

15. Composition d'alliage à base de titane selon l'une quelconque des revendications 1 à 14, dans laquelle l'alliage a une microstructure d'au moins 90 % de phase alpha.

**Effect of Zr-Sn on the merit indeces**

Figure 1: Contour maps of the merit indeces for the Ti-6Al-YZr-XSn system.

**Effect of Mo-Cr on the merit indeces**

Figure 2: Contour maps of the merit indeces for the Ti-6Al-4Sn-4Zr-YMo-XCr system.

## Effect of V-Fe on the merit indeces

Figure 3: Contour maps of the merit indeces for the Ti-6Al-4Sn-4Zr-YV-XFe system.

**Effect of Mo-Nb on the merit indeces**

Figure 4: Contour maps of the merit indeces for the Ti-6Al-4Sn-4Zr-YMo-XNb system.

## Effect of Al-Sn on the merit indeces

Figure 5: Contour maps of the merit indeces for the Ti-4Zr-YAl-XSn system.

**Effect of alloyants on merit indeces**

| Factor | Al | V | Fe | Mo | Zr | Cr | Nb | Sn |
|---|---|---|---|---|---|---|---|---|
| 1 Solidification range (safe range 90-275°C) | ↑ | ↑ | ↑↑↑↑ | ↑ | ↑ | ↑↑↑ | ↑ | ↑↑ |
| 2 CSC (lower is better) | - | - | ↑↑↑ | - | ↑ | ↑↑ | ↓ | ↓ |
| 3 GRF (higher is better) | ~ | ↑ | ↑↑ | ↑ | ↑ | ↑↑ | ↑↑ | ↑↑↑ |
| 4 Density (lower is better) | ↓↓ | ↑ | ↑↑ | ↑↑↑ | ↑ | ↑ | ↑↑ | ↑↑ |
| 5 $M_s$ (>800°C) | ↑↑ | ↓↓ | ↓↓↓↓ | ↓↓ | ↓ | ↓↓↓ | ↓ | ↓ |
| 6 Melting temperature (lower is better) | ~ | ↑ | ↓ | ↑ | ↑↑ | ↓↓ | ↑ | ↑↑ |
| 7 Beta strength (higher is better) | - | ↑↑ | ↑↑↑↑ | ↑↑ | ↑ | ↑↑↑ | ↑ | ↑ |
| 8 Diffusivity (lower is better) | ↓ | ↓ | ↑↑↑↑ | ↓↓↓ | ↑ | ↑↑ | ↓↓ | ↓ |

Figure 6: Effect of alloyants on the merit indeces.

EP 3 856 942 B1

# Five-forces design

Figure 7: Restrictions introduced to find optimal alloy space.

Figure 8: Contour map of the freezing range (°C) for the preferred alloy space.

Figure 9: Contour map of the cracking susceptibility (-) for the preferred alloy space.

**Growth restriction factor (-)**

Figure 10: Contour map of the growth restriction factor (-) for the preferred alloy space.

**Melting temperature (°C)**

Figure 11: Contour map of the melting temperature (°C) for the preferred alloy space.

Figure 12: Contour map of the martensitic start temperature (°C) for the preferred alloy space.

**Beta strength (MPa)**

Figure 13: Contour map of the beta precipitation strengthening (MPa) for the preferred alloy space.

**Density (g/cm$^3$)**

Figure 14: Contour map of the density (g/cm$^3$) for the preferred alloy space.

## Optimal alloy space

Figure 15: Optimal and most optimal space within the preferred alloy space.

## Claimed alloy space

| Claim 1* | Al | Sn | V | Mo | Nb | Zr | Cr | Fe | Si |
|---|---|---|---|---|---|---|---|---|---|
| Lower limit | 4 | 3 | 0 | 0 | 0 | 0 | 0 | 0 | 0 |
| Upper limit | 8 | 9 | 2 | 2 | 2 | 5 | 1.75 | 0.5 | 0.75 |

*only showing main elements

while: 0.107Al + 0.075V + 0.4Fe + 0.112Cr + 0.025Zr + 0.05Mo + 0.082Nb + 0.027Sn > 1.0

Figure 16: Chemistry range of the optimal alloy space.

## Restriction to find optimal space for additive manufacturing

| Baseline | Al | V | Fe | Cr | Zr | Mo | Nb | Sn | GRF Restriction | GRF Actual | Strength Restriction | Freezing range Restriction | Freezing range Actual | Density | Ms Restriction | CSF Restriction |
|---|---|---|---|---|---|---|---|---|---|---|---|---|---|---|---|---|
| 1 | 5 | 1 | 0 | 0 | 1 | 1 | 0 | 1 | 0.72 | 6 | 380 | 0.53 | 22 | 4.56 | 865 | 0.52 |
| 2 | 5 | 0 | 0 | 0 | 0 | 0 | 0 | 3 | 0.61 | 5 | 313 | 0.52 | 16 | 4.52 | 958 | 0.51 |
| 3 | 8 | 1 | 0 | 0 | 0 | 1 | 0 | 0 | 0.99 | 14 | 485 | 0.68 | 15 | 4.45 | 917 | 0.67 |
| 4 | 6 | 0 | 0 | 0 | 5 | 1 | 0 | 0 | 0.80 | 6 | 425 | 0.61 | 27 | 4.53 | 913 | 0.61 |
| 5 | 6 | 0 | 0 | 0 | 4 | 1 | 1 | 4 | 0.99 | 12 | 535 | 0.86 | 58 | 4.60 | 893 | 0.85 |
| 6 | 6 | 0 | 0 | 0 | 4 | 0 | 0 | 3 | 0.84 | 8 | 469 | 0.73 | 43 | 4.55 | 925 | 0.72 |
| 7 | 2 | 0 | 0 | 0 | 5 | 1 | 0 | 11 | 0.72 | 9 | 538 | 0.94 | 64 | 4.81 | 833 | 0.94 |

| Examples | Al | V | Fe | Cr | Zr | Mo | Nb | Sn | GRF Restriction | GRF Actual | Strength Restriction | Freezing range Restriction | Freezing range Actual | Density | Ms Restriction | CSF Restriction |
|---|---|---|---|---|---|---|---|---|---|---|---|---|---|---|---|---|
| 1 | 6 | 1 | 0 | 0 | 3 | 0 | 1 | 8 | 1.01 | 18.2 | 585 | 1.00 | 93 | 4.63 | 863 | 0.93 |
| 2 | 6 | 1 | 0 | 0 | 3 | 0 | 1 | 8 | 1.03 | 18.4 | 600 | 1.05 | 98 | 4.65 | 844 | 0.90 |
| 3 | 6 | 0 | 0 | 0 | 3 | 1 | 1 | 8 | 1.07 | 19.5 | 618 | 1.10 | 103 | 4.66 | 821 | 0.88 |
| 4 | 6 | 0 | 0 | 0 | 3 | 1 | 1 | 8 | 1.04 | 18.3 | 609 | 1.03 | 95 | 4.67 | 844 | 1.02 |
| 5 | 6 | 1 | 0 | 0 | 2 | 0 | 1 | 8 | 1.06 | 18.9 | 598 | 1.01 | 94 | 4.61 | 857 | 0.91 |
| 6 | 6 | 1 | 0 | 0 | 2 | 1 | 1 | 8 | 1.06 | 18.6 | 609 | 1.05 | 97 | 4.62 | 842 | 0.88 |
| 7 | 6 | 1 | 0 | 1 | 2 | 1 | 1 | 8 | 1.09 | 20.0 | 624 | 1.10 | 102 | 4.63 | 823 | 0.86 |
| 8 | 6 | 0 | 0 | 0 | 2 | 1 | 1 | 8 | 1.04 | 18.4 | 603 | 1.01 | 93 | 4.63 | 861 | 1.00 |
| 9 | 7 | 2 | 0 | 0 | 2 | 0 | 1 | 7 | 1.12 | 19.6 | 617 | 1.01 | 95 | 4.59 | 847 | 0.91 |
| 10 | 7 | 1 | 0 | 0 | 2 | 1 | 1 | 7 | 1.11 | 18.9 | 619 | 1.04 | 97 | 4.59 | 841 | 0.87 |
| 11 | 7 | 1 | 0 | 1 | 2 | 1 | 1 | 7 | 1.14 | 19.6 | 634 | 1.09 | 102 | 4.61 | 822 | 0.85 |
| 12 | 7 | 0 | 0 | 0 | 2 | 1 | 1 | 7 | 1.09 | 18.3 | 607 | 1.00 | 92 | 4.61 | 866 | 0.99 |

*examples may include up to 0.75 wt. % Si, up to 0.5 wt. % B and C, and substitute Mo with W (Mo = 0.5W) to improve high temperature properties.

Equations:

GRF

$$0.107Al + 0.075V + 0.4Fe + 0.112Cr + 0.025Zr + 0.05Mo + 0.082Nb + 0.027Sn > 1.0$$

Strength

$$50Al + 35V + 75Fe + 65Cr + 20Zr + 50Mo + 15Nb + 25Sn > 550$$

Freezing

$$0.076Al + 0.0153V + 1.53Fe + 0.23Cr + 0.025Zr + 0.05Mo + 0.028Nb + 0.054Sn > 1.0$$

Figure 17: Relationship that restricts the optimal alloy space for additive manufacturing.

Figure 18: Scatter plot of the crack susceptibility factor against the solidification range.

EP 3 856 942 B1

Figure 19: Scatter plot of the crack susceptibility factor against the growth restriction factor.

34

Figure 20: Scatter plot of the growth restriction factor against the solidification range.

Figure 21: Scatter plot of the growth restriction factor against the rest of merit indeces.

# EP 3 856 942 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- RU 2484166

- RU 2507289

**Non-patent literature cited in the description**

- **SURESH NEELAKANTANA.** Prediction of the martensite start temperature for β titanium alloys as a function of composition. *Scripta Materialia,* 2009, vol. 60, 611
- **T. E. QUESTED ; A. T. DINSDALE ; A. L. GREER.** Thermodynamic Modeling of Growth-Restriction Effects in Aluminum Alloys. *Acta Materialia,* 2005, vol. 53, 1323

- **SADEGHPOR.** A new multi-element beta titanium alloy with a high yield strength exhibiting transformation and twinning induced plasticity effects. *Scripta Materialia,* 2018